# NEW EUROPEAN PATENT SPECIFICATION

(11) **EP 0 258 753 B2**
(45) Date of publication and mention of the opposition decision: **12.09.2001**
(45) Mention of the grant of the patent: 29.01.1992
(21) Application number: 87112110.9
(22) Date of filing: 20.08.1987
(51) Int. Cl.: C09J 133/00, C08F 220/18, C08F 2/26

(54) **Use of pressure sensitive adhesive compositions**
Verwendung von druckempfindlichen Klebstoffzusammensetzungen
Utilisation de compositions adhésives sensibles à la pression

(30) Priority: 22.08.1986 US 899282
(43) Date of publication of application: 09.03.1988
(73) Proprietor: S.C.JOHNSON COMMERCIAL MARKETS, INC., Sturtevant, Wisconsin 53177-0902 (US)
(72) Inventor: Frazee, Glenn Robert, Kenosha, WN 53140 (US)
(74) Representative: Baillie, Iain Cameron

(56) References cited:
- EP-A- 0 173 300
- EP-A- 0 212 358
- GB-A- 1 259 459
- US-A- 4 151 143
- US-A- 4 204 023

## Description

The present invention relates to pressure sensitive adhesive compositions.

Pressure sensitive adhesives (PSAs) are a class of adhesive compositions which are applied with pressure, usually finger pressure, and generally do not undergo a liquid to solid transition in order to hold materials together. PSAs can be solvent-free natural or synthetic resins having a viscoelastic property termed tack. Tack is a property characterized by the rapid wetting of a substrate by a polymer to form an adhesive bond upon brief contact with the substrate under light pressure. Typical applications for PSAs include pressure-sensitive tapes, labels, decals, decorative vinyls, laminates, wall coverings and floor tiles.

The early pressure sensitive tapes used adhesives that were based on organic solvent solutions of natural or synthetic rubber, tackified by a resinous material. Later, the rubber in pressure sensitive adhesives was replaced with styrene-butadiene block copolymers. More recently, the polyacrylates have gained wide acceptance in pressure sensitive adhesive formations due to their clarity and resistance to oxidation and sunlight.

Acrylic copolymer PSAs are available as solution or aqueous emulsion polymers. The solution polymers have the disadvantages of low molecular weight due to chain transfer during the polymerization, viscous solutions at higher molecular weights, and the need for elaborate coating processes and solvent recovery equipment to satisfy economic and environmental requirements. The anionic and nonionic emulsifiers generally employed in acrylic emulsion polymerization protect the soft pressure sensitive polymers from impact coalescence during the reaction and stabilize the latex for satisfactory mechanical and storage stability. However, the emulsifiers do have adverse effects on pressure sensitive adhesive properties. The emulsifiers employed in emulsion polymerization adversely affect water resistance, tack and adhesion properties of emulsion polymer adhesives.

Canadian Patent No. 814.528 discloses low molecular weight alkali soluble resins, resin cuts and methods for their preparation and purification. The resins are disclosed as being especially useful as emulsifiers, leveling agents and film-formers. The number average molecular weight of the resins range from 700-5000 and the resins have acid numbers between 140 and 300. The resins are disclosed as emulsifiers in the preparation of emulsion polymers resulting in emulsion polymers which are stable and substantially free from coagulum. For use as an emulsifier in emulsion polymerization reaction, the resins must have a number average molecular weight between 1,000 and 2,000 and preferably between 1,000 and 1,500. Resins having a number average molecular weight greater than 2,000 result in unstable and coaguiated emulsion polymers when used as the emulsifier in emulsion polymerization reactions.

The object of the present invention is to provide a pressure sensitive adhesive composition having substantially Newtonian-like flow characteristics.

In Spain and Greece the present invention provides use of a composition containing an emulsion polymer and, optionally, tackifiers, dyes, leveling agents, pigments or other pressure sensitive adhesive formulation ingredients as a pressure-sensitive adhesive, characterized by the emulsion polymer being prepared by combining, in an agitated reaction vessel, an alkali-soluble or an alkali-dispersible polymeric resin with water and an effective amount of an alkaline material for forming either a resin-containing alkaline solution or a resin containing alkaline dispersion, wherein at least 6 weight percent up to 30 weight percent of the polymeric resin is prepared from monomers selected from the group consisting of a polymerizable carboxylic acid, a polymerizable acid anhydride, and a polymerizable ester or a polymerizable partial ester of an inorganic acid, and wherein the polymer resin further includes a polymerizable vinyl monomer selected from the group consisting of acrylic acid esters and derivatives thereof, methacrylic acid esters and derivatives thereof, styrene, alpha-methyl styrene, vinyl toluene, and combinations thereof
subjecting the agitated reaction vessel contents to an inert atmosphere and maintaining the agitated reaction vessel contents at a predetermined reaction temperature;
adding to the agitated reaction vessel a portion of an emulsion-polymerizable monomer mixture and thereafter adding an effective amount of an initiator for initiating emulsion-polymerization of the emulsion-polymerizable monomer mixture in the presence of the polymeric resin, wherein at least 40 weight percent of the emulsion-polymerizable monomer mixture consists of ac least one alkylacrylate monomer having an alkyl group with from 2 to 20 carbon atoms and the monomer mixture may contain one or more of styrene, alpha-methyl styrene, tetraethylene glycol diacrylate, hydroxyethyl methacrylate, methyl methacrylate, propyl methacrylate, hexyl methacrylate, vinyl acetate and combinations thereof:
then adding to the agitated reaction vessel, over a time period of at least 1/2 hour, the remainder of the emulsion-polymerizable monomer mixture; and
thereafter, maintaining the agitated reaction vessel contents at the predetermined reaction temperature for a time period of at least 1/2 hour, for producing a polymer emulsion that can be utilized as a pressure-sensitive adhesive."

In Austria, Belgium, Switzerland, Liechtenstein, Germany, France, Britain, Italy, Luxembourg, Netherlands and Sweden the polymerisable vinyl monomer does not include the acrylic or methacrylic esters of polyalkylene oxide.

The present invention provides advantages over known acrylic copolymer adhesives by providing an improved pressure-sensitive adhesive formulation having (a) fine particle size emulsions, (b) emulsion viscosities which can be varied from low to high with no sacrifice in stability, (c) emulsion viscosities which are stable under high shear conditions encountered in roll coating operations (Newtonion-like flow characteristics) and (d) low foam production which is desirable in roll coating operations.

In summary, the acrylic pressure sensitive adhesives according to the present invention have excellent flow, coating and leveling characteristics especially on low energy surfaces and on high speed equipment. The present acrylic emulsion polymers are characterized by near Newtonian flow and are slightly translucent.

Briefly, in accordance with the present invention, an improved acrylic pressure sensitive adhesive is prepared by using an acrylic emulsion polymer made in the presence of a support resin.

The acrylic emulsion polymer adhesive of the present invention is prepared by an emulsion polymerization technique wherein the support resin is employed as the emulsifying agent. However, minor amounts of traditional emulsifying agents may be used.

In the preparation of the present acrylic emulsion polymers, the support resin and alkaline materials such as alkaline metal Hydroxides, amines, etc. or ammonia are added to a suitable reaction vessel with water to form a solution or dispersion of the support resin therein. Optionally, a minor amount of a nonionic or anionic surfactant can be added to the reaction mixture. A minor amount, i.e., about 10%, of the premixed monomers employed in the acrylic polymer are added to the reaction vessel with agitation. A short time thereafter, i.e., 5-10 minutes, an initiator is added to the reaction mixture followed by the slow addition of the remaining monomer mixture over a 1 to 2 hour period.

The emulsion polymerization reaction is usually conducted under an inert atmosphere, i.e., nitrogen, and at an elevated temperature, i.e., 70-105° C, when thermal initiators are employed. When redox initiators are employed then the reaction can be conducted at temperatures as low as about -3°C. The reaction mixture is maintained under sufficient agitation to thoroughly mix the components during the reaction. After the reaction, the acrylic emulsion polymer is filtered to remove large particles.

The acrylic emulsion polymer prepared according to the above-described procedures can be used neat as a pressure sensitive adhesive or can be admixed with standard pressure sensitive adhesive ingredients such as dyes, preservatives, tackifiers, perfumes, coalescing solvents and leveling aids.

A number of preferred embodiments of the invention will now be described in greater detail.

In the practice of the present invention, an acrylic emulsion polymer may be employed which contains from 40-90 weight percent 2-ethylhexylacrylate (2-EHA), butylacrylate (BA), isooctylacrylate, isodecylacryiate or mixtures thereof, made in the presence of a support resin containing butylacrylate and acrylic acid having a number average (Mn) molecular weight in the range of 2,000-2,300.

The support resin performs the function of the emulsifiers used in standard emulsion polymerization techniques. Optionally, however, the support resin can serve as the major amount of emulsifier and a minor amount of nonionic or anionic emulsifiers can be present in the emulsion polymerization reaction. The support resin is comprised of one or more vinyl monomers, i.e., acrylic acid and esters and derivatives thereof, methacrylic acid and esters and derivatives thereof, styrene, alphamethyl styrene, vinyl toluene and the like with the proviso that there must be at least about 6% by weight of a polymerizable carboxylic acid, an acid anhydride or an ester or a partial ester of inorganic acids (partial esters of sulfuric acid, phosphoric acid, sulfonic acid or phosphonic acid). Preferably there is at least 6% by weight of acrylic acid or methacrylic acid in the resin backbone. The resin must be soluble or dispersible in an alkali solution and when the support resin is added to the reaction mixture, the total system must be kept at a pH of at least 7. The resin must have an acid number of at least 30. advantageously 100-300 and preferably 150-200. When used herein, the term "acid number", when referring to the support resin, indicates the number of milligrams (mg) of KOH required to neutralize one (1) gram of resin. The molecular weight of the support resin should be in a range of from 1,000 to 15,000, and advantageously from 1,800 to 3,600 and preferably from 2,000 to 2,300. The percentage of total solids the support resin represents in the final emulsion is from 10 to 40% by weight and preferably from 25 to 35% by weight.

The acrylic emulsion polymer component represents from about 60 to about 90% by weight of the total weight of the total solids. The term "solids" when used herein, refers to the total weight of non-volatile components. The acrylic emulsion polymer of the present invention is a polymer comprising one or more vinylic monomers wherein at least 40% by weight of the polymer is an alkylacrylate monomer or mixtures of alkylacrylate monomers having an alkyl group with from 2 to 20, and preferably 4 to 10, carbon atoms. Preferred alkylacrylate monomers include 2-ethylhexylacrylate (2-EHA) and butylacrylate (BA) isooctylacrylate (IOA), isodecylacrylate (IDA) or mixtures thereof.

The vinylic monomers employed in the acrylic emulsion polymer in addition to alkylacrylate can be any vinylic monomer which does not reduce the pH of the reaction mixture to below about 7. These vinylic monomers are copolymerized with the alkylacrylate to modify the properties of the resulting pressure sensitive adhesives according to the end-use applications and are readily determinable to one skilled in the art. Divinyl monomers can be used to increase the molecular weight and the internal strength of the polymer backbone and are generally employed in amounts less than about 7% by weight of the acrylic polymer. Suitable vinylic monomers employed in the practice of the present invention include styrene (ST), alpha methyl styrene (AMS), tetraethylene glycol diacrylate (TEGDA), hydroxyethylmethacrylate (HEMA), methylmethacrylate (MMA), ethylacrylate (EA), methylacrylate (MA), propylacrylates (PA), propylmethacrylates (PM), hexylacrylates (HA), hexylmethacrylates (HMA), and vinyl acetate.

The total solids of the acrylic emulsion polymer can vary from 15 to 60 weight percent based on the total weight of the emulsion mixture. Advantageously, the total solids content is from 30-58 and preferably 48-53% by weight.

The acrylic emulsion polymers are prepared employing standard emuslion polymerization techniques with the exception that the support resin is employed as the emulsifying agent or, alternatively, as the major portion of the emulsifying agent, i.e., a minor amount of nonionic or anionic emulsifiers can be employed in combination with the support resin. To prepare the acrylic emulsion polymers, the support resin is admixed with about 90% of the water to be employed in the reaction. An alkaline material such as ammonia, alkali metal hydroxide, amine, etc. is added to the water and support resin to dissolve or disperse the support resin. The reaction is conducted at a temperature suitable for the initiator being employed, i.e., 70-105°C for thermal initiators and as low as -3° C for redox initiators.

After the support resin has been dissolved in the water and this mixture is brought to reaction temperature, the minor amount of emulsifiers, if employed, is then added to the reaction mixture. A minor portion of the vinylic monomer mixture is then added to the reaction mixture with agitation and held for a short period of time (5 to 10 minutes). The initiator, dissolved in the remaining water, is then added to the mixture of support resin and monomer with agitation and held for a short period of time, usually 5 to 20 minutes. The remaining monomer mixture is then slowly added to the reaction mixture over an extended period of time usually from 1/2 hour to 2 hours. During the reaction, the reaction mixture is constantly maintained in an agitated state to provide a thorough mix of components. The reaction is conducted under an inert atmosphere such as nitrogen. After the addition of the remaining monomer mixture, the reaction mixture is maintained at reaction temperature for an additional period of time, usually from 1/2 hour to 2 hours. Thereafter, the resulting emulsion polymer is cooled to 25°C, filtered and stored in a suitable container.

The initiators employed in the emulsion polymerization reaction are not critical to the practice of the present invention. The initiator can be water-soluble or oil-soluble and can be a thermal initiator or a redox initiator. Any water soluble material that can generate a free radical is preferably used as the initiator. The free radical initiators include various peroxygen compounds such as persulfates, t-butyl hydroperoxide and similar peroxide catalysts and azo compounds, such as azobis-isobutylnitrile and dimethyl azobisisobutyrate. Other initiator systems include (1) alkali metal persulfate or ammonium persulfate with or without reducing agents adapted to activate the sulfate and (2) the oil soluble initiator ditertiary butyl peroxide. The free radical initiators are ordinarily present in the reaction at a level of from 0.01 to 2% by total weight of the reaction mixture.

An emulsifying agent can optionally be added as a minor component of the emulsifier system in the present reaction. The particular emulsifying agent employed is not critical to the practice of the present invention. The standard emulsifiers used for emulsion polymerization processes are acceptable. The emulsifiers include nonionic and anionic surfactants. Mixtures of various surfactants can also be employed. Suitable nonionic surfactants include (1) ethylene oxide derivatives of alkylphenols, such as octylphenoxy polyethoxyethanol and nonylphenoxy polyoxyethoxyethanol, both commercially available under the TRITON and SURFONIC brand names; (2) long chain ethoxylated alcohols such as linear or branched C₆-C₁₅ primary alcohol ethoxylates, commercially available under the NEODOL and ALFONIC brand names; (3) the PLURONIC series of block copolymer surfactants which are commercially available from BASF Wyandotte; and (4) polyalkylene glycols, such as polypropyline glycol having an average molecular weight of from 800 to 2,000. A preferred nonionic emulsifier is polypropylene glycol having an average molecular weight of about 1,200 which is commerically available from The Dow Chemical Company as POLYGLYCOL P-1200. Suitable anionic surfactants include (1) alkyl sulfates such as lauryl sulfate; (2) esters of sulfonated dicarboxycyclic acid, especially succinic acid. A preferred anionic surfactant is Dowfax 2Al brand sodium dodecyl diphenyloxide disulfonate.

Once prepared, the present acrylic emulsion polymers can be used neat as pressure sensitive adhesives. Alternatively, other pressure sensitive adhesive ingredients can be added to the present acrylic emulsion polymers to provide a pressure sensitive adhesive with desired properties. These pressure sensitive adhesive ingredients include tackifiers, dyes, preservatives, leveling aids, coalescing solvents, perfumes, and the like. These optional ingredients are well known to one skilled in the art and are employed in concentrations readily determinable by one skilled in the art.

The PSA compositions of the present invention are used in any pressure sensitive adhesive application. Such applications include tapes, stickers, labels, decals, decorative (especially wood grain) vinyls, laminates, wall coverings and floor tiles. The present acrylic emulsion polymer PSAs have substantially Newtonian-like flow characteristics and have desirable flow, coating and leveling characteristics on low energy surfaces. Additionally, the present acrylic emulsion polymer PSAs are usable on high speed equipment.

The following ingredients are admixed to prepare a preferred embodiment of the present invention:

| Ingredients | Weight % | |
|---|---|---|
| | Range | Preferred |
| Support resin (BA/AA,Mₙ = 2,000 - 2,300) | 0.75 - 15 | 11 - 14 |
| Ammonia | 2 - 5 | 2 - 5 |
| Nonionic surfactant | 0.5 - 5 | 0.5 - 5 |
| Initiator | 0.01 - 2 | 0.01 - 2 |
| Monomer mixture (at least 40% 2-EHA) | 14.25 - 57 | 35 - 50 |
| Water | Balance | Balance |

In an especially preferred embodiment, the support resin comprises a BA/AA copolymer having an Mₙ of between 2,000 and 2,300 and a BA/AA weight ratio of about 70/30, respectively, and the acrylic emulsion polymer comprises at least 70 weight percent 2-EHA in combination with any one or more of the following monomers: BA, ST, AMS, MMA, HEMA and up to about 7 percent by weight TEGDA.

The following examples illustrate the practice of the present invention. All percentages are by weight unless specified otherwise.

### EXAMPLE 1

The following ingredients were admixed according to the procedures described below to make an acrylic emulsion polymer pressure sensitive adhesive of the present invention:

| PSA FORMULATION 1 | |
|---|---|
| Ingredients | Weight % |
| Support resin (solution resin BA(70%)/AA(30%);Mₙ = 2,000) | 11.93 |
| Aqueous ammonia | 2.39 |
| POLYGLYCOL P-1200 brand polypropyleneglycol nonionic surfactant | 0.48 |
| Ammonium persulfate initiator | 0.25 |
| Monomer mixture MMA(10)/2-EHA(77)/BA(10)/TEGDA (3) | 35.81 |
| Deionised water | 49.14 |

The support resin, admixed with 90% of the deionised water, and all of the aqueous ammonia were charged to a 4-neck flask equipped with a reflux condenser, thermometer, stirrer, addition funnel and a nitrogen gas inlet. The reaction mixture was stirred and heated to 85° C under a nitrogen atmosphere. When the temperature reached 85°C, the nonionic surfactant was added to the flask with moderate (small vortex present) stirring for 5 minutes. Ten (10%) percent of the monomer mixture was then added to the flask with good agitation for 5 minutes while maintaining a temperature of 85° C. The ammonium persulfate initiator was dissolved in the remaining deionized water and added to the flask with agitation. After a slight drop in temperature, the reaction temperature was brought back to 85° C for 10 minutes. The remaining monomer mixture was fed into the flask over a one-hour period while maintaining a temperature of 85° C. After the monomer addition, the reaction mixture was maintained for one hour at 85° C with good agitation. The reaction mixture was then quickly cooled to 25° C and the emulsion polymer was recovered.

The emulsion polymer of PSA Formulation 1 was then tested for adhesion properties according to routine standardized tests. No optional PSA ingredients were added to Formulation 1 to conduct these adhesion tests. Formulation 1 had a shear of 500 minutes (PSTC-7), a peel strength of 5 pounds per linear inch (5 pli) (PSTC-11 modified for 24 hour dwell times) and a tack of 750 grams (g) (A-1-1 on a Polyken probe tack tester).

### EXAMPLE 2

Employing substantially the same procedures described in Example 1, the following ingredients were employed to prepare PSA Formulation 2:

| PSA FORMULATION 2 | |
|---|---|
| Ingredients | Weight % |
| Support resin (solution resin BA(70)/AA(30); Mₙ = 2,000-2,200) | 13.03 |
| Aqueous ammonia | 3.82 |
| Polypropylene glycol nonionic surfactant (POLYGLYCOL P-1200) | 0.61 |
| DOWFAX 2A1 anionic surfactant | 0.08 |
| Ammonium persulfate (APS) initiator | 0.27 |
| Monomer mixture MMA(10)/2-EHA(77)/BA(10)/TEGDA(3) | 39.08 |
| Deionized water | 43.11 |

PSA Formulation 2 had the following adhesion properties:

| | |
|---|---|
| Peel | 3.6 pli |
| Shear | 900 min. |
| Tack | 600g (A-1-1). |

### EXAMPLE 3

Employing substantially the same procedures described in Example 1, the following ingredients were employed to prepare PSA Formulation 3:

| PSA FORMULATION 3 | |
|---|---|
| Ingredients | Weight % |
| Support resin (solution resin BA(70)/AA(30); Mₙ = 2,000-2,200) | 11.97 |
| Aqueous ammonia | 2.39 |
| DOWFAX 2A1 anionic surfactant | 0.24 |
| APS initiator | 0.25 |
| Monomer mixture 2-EHA(77)/BA(10)/HEMA(10)/TEGDA(3) | 35.9 |
| Deionized water | 49.26 |

PSA Formulation 3 had the following adhesion properties:

| | |
|---|---|
| Peel | 4.0 pli |
| Shear | 3500 min. |
| Tack | 500g (A-1-1) |

### EXAMPLE 4

Employing substantially the same procedures described in Example 1, the following ingredients were employed to prepare PSA Formulation 4:

| PSA FORMULATION 4 | |
|---|---|
| Ingredients | Weight % |
| Support resin (solution resin BA(65)/AA(20)/ST(15); Mₙ = 2,000-2,200) | 9.95 |
| Aqueous ammonia | 2.23 |
| Polypropylene glycol nonionic surfactant (POLYGLYCOL P-1200) | 0.53 |
| APS initiator | 0.21 |
| Monomer mixture ST(31)/2-EHA(54.21)MMA(7.22)/BA(7.22)/TEGDA(0.35) | 28.9 |
| Deionized water | 58.18 |

PSA Formulation 4 had the following adhesion properties:

| | |
|---|---|
| Peel | 2.5 pli |
| Shear | 8000 min. |
| Tack | 20 g (A-1-1) |

### EXAMPLE 5

Employing substantially the same procedures described in Example 1, the following ingredients were employed to prepare PSA Formulation 5:

| PSA FORMULATION 5 | |
|---|---|
| Ingredients | Weight % |
| Support resin (solution resin BA(70)/AA(30); Mₙ = 2,000-2,300) | 11.94 |
| Aqueous ammonia | 2.39 |
| Propylene glycol nonionic surfactant (POLYGLYCOL P-1200) | 0.48 |
| APS initiator | 0.25 |
| Monomer mixture MMA(10)/2-EHA(77)/BA(10)/TEGDA(3) | 35.81 |
| Deionized water | |

PSA Formulation 5 had the following adhesion properties:

| | |
|---|---|
| Peel | 4.5 pli |
| Shear | 3800 min. |
| Tack | 500 g |

In similar operations, the various support resins and vinylic monomers described herein are employed in the preparation of acrylic emulsion polymer PSA compositions having desirable physical and mechanical properties.

## Claims (Claims for the following Contracting State(s): AT BE CH LI DE FR GB IT LU NL SE)

1. Use of a composition containing an emulsion polymer and, optionally, tackifiers, dyes, levelling agents, pigments or other pressure sensitive adhesive formulation ingredients as a pressure-sensitive adhesive, **characterized by** the emulsion polymer being prepared by combining, in an agitated reaction vessel, an alkali-soluble or an alkali-dispersible polymeric resin with water and an effective amount of an alkaline material for forming either a resin-containing alkaline solution or a resin containing alkaline dispersion, wherein at least 6 weight percent up to 30 weight percent of the polymeric resin is prepared from monomers selected from the group consisting of a polymerizable carboxylic acid, a polymerizable acid anhydride, and a polymerizable ester or a polymerizable partial ester of an inorganic acid, and wherein the polymer resin further includes a polymerizable vinyl monomer selected from the group consisting of acrylic acid esters and derivatives thereof, methacrylic acid esters and derivatives thereof, styrene, alpha-methyl styrene, vinyl toluene, and combinations thereof, but does not include the acrylic or methacrylic esters of polyalkylene oxide;
subjecting the agitated reaction vessel contents to an inert atmosphere and maintaining the agitated reaction vessel contents at a predetermined reaction temperature;
adding to the agitated reaction vessel a portion of an emulsion-polymerizable monomer mixture and thereafter adding an effective amount of an initiator for initiating emulsion-polymerization of the emulsion-polymerizable monomer mixture in the presence of the polymeric resin, wherein at least 40 weight percent of the emulsion-polymerizable monomer mixture consists of at least one alkylacrylate monomer having an alkyl group with from 2 to 20 carbon atoms and the monomer mixture may contain one or more of styrene, alpha-methyl styrene, tetraethylene glycol diacrylate, hydroxyethyl methacrylate, methyl methacrylate, propyl methacrylate, hexyl methacrylate, vinyl acetate and combinations thereof;
then adding to the agitated reaction vessel, over a time period of at least 1/2 hour, the remainder of the emulsion-polymerizable monomer mixture; and
thereafter, maintaining the agitated reaction vessel contents at the predetermined reaction temperature for a time period of at least 1/2 hour, for producing a polymer emulsion that can be utilized as a pressure-sensitive adhesive.

2. Use as claimed in claim 1, **characterized in that** the alkylacrylate is 2-ethylhexylacrylate, butyl-acrylate, isooctylacrylate, isodecylacrylate or mixtures thereof and the alkylacrylates comprise from 40 to 90 percent by weight of the emulsion polymer.

3. Use as claimed in claim 1 or 2 **characterized in that** the support resin has at least 6 weight percent of acrylic acid, methacrylic acid or maleic anhydride.

4. Use as claimed in any of claims 1, 2 or 3, **characterized in that** the acid number of the support resin is from 100 to 300.

5. Use as claimed in any of claims 1 to 4, **characterized by** a minor amount of an anionic or nonionic emulsifier.

6. Use as claimed in claim 1, **characterized in that** the alkylacrylate (1) is 2-ethylhexylacrylate and comprises at least 70 percent by weight of the emulsion polymer and (2) the other vinylic monomers of the emulsion polymer are butylacrylate, styrene, alphamethyl-styrene, methylmethacrylate, hydroxyethylmethacrylate, up to 7 percent by weight tetraethylene glycol diacrylate or mixtures thereof.

7. Use as claimed in claim 1 or 6, **characterized in that** the support resin is a butylacrylate/acrylic acid copolymer.

8. Use as claimed in claim 6, **characterized in that** the support resin is a butylacrylate/acrylic acid/styrene terpolymer.

9. Use as claimed in claim 7 or 8, **characterized in that** the support resin has a number average molecular weight of from 2,000 to 2,300.

10. Use as claimed in claim 9, **characterized in that** the emulsion polymer is comprised of the following monomers in weight percent:
| MONOMER | WEIGHT PERCENT |
|---|---|
| Styrene | 31 |
| 2-ethylhexylacrylate | 54.21 |
| methylmethacrylate | 7.22 |
| butylacrylate | 7.22 |
| tetraethylene glycol diacrylate | 0.35 |

11. Use as claimed in claim 9, **characterized in that** the support resin has a weight ratio of butylacrylate to acrylic acid of 70: 30.

12. Use as claimed in claim 11, **characterized in that** the emulsion polymer is comprised of the following monomers in weight percent:
| MONOMER | WEIGHT PERCENT |
|---|---|
| methylmethacrylate | 10 |
| 2-ethylhexylacrylate | 77 |
| butylacrylate | 10 |
| tetraethylene glycol diacrylate | 3 |

13. Use as claimed in claim 11, **characterized in that** the emulsion polymer is comprised of the following monomers in weight percent:
| MONOMER | WEIGHT PERCENT |
|---|---|
| 2-ethylhexylacrylate | 77 |
| butylacrylate | 10 |
| hydroxyethylmethacrylate | 10 |
| tetraethylene glucol diacrylate | 3 |

## Claims (Claims for the following Contracting State(s): ES GR)

1. Use of a composition containing an emulsion polymer and, optionally, tackifiers, dyes, levelling agents, pigments or other pressure sensitive adhesive formulation ingredients as a pressure-sensitive adhesive, **characterized by** the emulsion polymer being prepared by combining, in an agitated reaction vessel, an alkali-soluble or an alkali-dispersible polymeric resin with water and an effective amount of an alkaline material for forming either a resin-containing alkaline solution or a resin containing alkaline dispersion, wherein at least 6 weight percent up to 30 weight percent of the polymeric resin is prepared from monomers selected from the group consisting of a polymerizable carboxylic acid, a polymerizable acid anhydride, and a polymerizable ester or a polymerizable partial ester of an inorganic acid, and wherein the polymer resin further includes a polymerizable vinyl monomer selected from the group consisting of acrylic acid esters and derivatives thereof, methacrylic acid esters and derivatives thereof, styrene, alpha-methyl styrene, vinyl toluene, and combinations thereof;
subjecting the agitated reaction vessel contents to an inert atmosphere and maintaining the agitated reaction vessel contents at a predetermined reaction temperature;
adding to the agitated reaction vessel a portion of an emulsion-polymerizable monomer mixture and thereafter adding an effective amount of an initiator for initiating emulsion-polymerization of the emulsion-polymerizable monomer mixture in the presence of the polymeric resin, wherein at least 40 weight percent of the emulsion-polymerizable monomer mixture consists of at least one alkylacrylate monomer having an alkyl group with from 2 to 20 carbon atoms and the monomer mixture may contain one or more of styrene, alpha-methyl styrene, tetraethylene glycol diacrylate, hydroxyethyl methacrylate, methyl methacrylate, propyl methacrylate, hexyl methacrylate, vinyl acetate and combinations thereof;
then adding to the agitated reaction vessel, over a time period of at least 1/2 hour, the remainder of the emulsion-polymerizable monomer mixture; and
thereafter, maintaining the agitated reaction vessel contents at the predetermined reaction temperature for a time period of at least 1/2 hour, for producing a polymer emulsion that can be utilized as a pressure-sensitive adhesive.

2. Use as claimed in claim 1, **characterized in that** the alkylacrylate is 2-ethylhexylacrylate, butyl-acrylate, isooctylacrylate, isodecylacrylate or mixtures thereof and the alkylacrylates comprise from 40 to 90 percent by weight of the emulsion polymer.

3. Use as claimed in claim 1 or 2 **characterized in that** the support resin has at least 6 weight percent of acrylic acid, methacrylic acid or maleic anhydride.

4. Use as claimed in any of claims 1, 2 or 3, **characterized in that** the acid number of the support resin is from 100 to 300.

5. Use as claimed in any of claims 1 to 4, **characterized by** a minor amount of an anionic or nonionic emulsifier.

6. Use as claimed in claim 1, **characterized in that** the alkylacrylate (1) is 2-ethylhexylacrylate and comprises at least 70 percent by weight of the emulsion polymer and (2) the other vinylic monomers of the emulsion polymer are butylacrylate, styrene, alphamethyl-styrene, methylmethacrylate, hydroxyethylmethacrylate, up to 7 percent by weight tetraethylene glycol diacrylate or mixtures thereof.

7. Use as claimed in claim 1 or 6, **characterized in that** the support resin is a butylacrylate/acrylic acid copolymer.

8. Use as claimed in claim 6, **characterized in that** the support resin is a butylacrylate/acrylic acid/styrene terpolymer.

9. Use as claimed in claim 7 or 8, **characterized in that** the support resin has a number average molecular weight of from 2,000 to 2,300.

10. Use as claimed in claim 9, **characterized in that** the emulsion polymer is comprised of the following monomers in weight percent:
| MONOMER | WEIGHT PERCENT |
|---|---|
| Styrene | 31 |
| 2-ethylhexylacrylate | 54.21 |
| methylmethacrylate | 7.22 |
| butylacrylate | 7.22 |
| tetraethylene glycol diacrylate | 0.35 |

11. Use as claimed in claim 9, **characterized in that** the support resin has a weight ratio of butylacrylate to acrylic acid of 70: 30.

12. Use as claimed in claim 11, **characterized in that** the emulsion polymer is comprised of the following monomers in weight percent:
| MONOMER | WEIGHT PERCENT |
|---|---|
| methylmethacrylate | 10 |
| 2-ethylhexylacrylate | 77 |
| butylacrylate | 10 |
| tetraethylene glycol diacrylate | 3 |

13. Use as claimed in claim 11, **characterized in that** the emulsion polymer is comprised of the following monomers **in weight percent:**
| MONOMER | WEIGHT PERCENT |
|---|---|
| 2-ethylhexylacrylate | 77 |
| butylacrylate | 10 |
| hydroxyethylmethacrylate | 10 |
| tetraethylene glucol diacrylate | 3 |

## Patentansprüche (Patentansprüche für folgende(n) Vertragsstaat(en): AT, BE, CH, LI, DE, FR, GB, IT, LU, NL, SE)

1. Verwendung einer Zusammensetzung, enthaltend ein Emulsionspolymer und wahlweise Klebrigmacher, Farbstoffe, Verlaufmittel, Pigmente oder andere Bestandteile von Haftklebstoff-Formulierungen, als einen Haftklebstoff, **dadurch gekennzeichnet, dass** das Emulsionspolymer hergestellt wird durch
Vereinigen eines alkalilöslichen oder in Alkali dispergierbaren polymeren Harzes mit Wasser und einer wirksamen Menge einer alkalischen Substanz in einem Reaktionsrührgefäß, zur Bildung entweder einer Harz enthaltenden alkalischen Lösung oder einer Harz enthaltenden alkalischen Dispersion, in welcher mindestens 6 Gewichtsprozent und bis zu 30 Gewichtsprozent des polymeren Harzes hergestellt werden aus Monomeren, ausgewählt aus der Gruppe, bestehend aus einer polymerisierbaren Carbonsäure, einem polymerisierbaren Säureanhydrid und einem polymerisierbaren Ester; oder einem polymerisierbaren Ester einer anorganischen Säure; und in welcher das Polymerharz ein polymerisierbares Vinylmonomer enthält, ausgewählt aus der Gruppe, bestehend aus Acrylsäureestern und Derivaten davon, Methacrylsäureestern und Derivaten davon, Styrol, α-Methylstyrol, Vinyltoluol und Kombinationen davon, wobei jedoch nicht die Acryl- und Methacrylsäureester von Polyalkylenoxid einbezogen sind;
Unterwerfen der Inhalte des Reaktionsrührgefäßes einer inerten Atmosphäre und Halten der Inhalte des Reaktionsrührgefäßes bei einer vorbestimmten Reaktionstemperatur;
Zusetzen eines Teils eines emulsionspolymerisierbaren Monomergemisches in das Reaktionsrührgefäß und danach Zusetzen einer wirksamen Menge eines Initiators zum Einleiten der Emulsionspolymerisation des emulsionspolymerisierbaren Monomergemisches in Gegenwart des polymeren Harzes, in welchem mindestens 40 Gewichtsprozent der emulsionspolymerisierbaren Monomergemisches aus mindestens einem Alkylacrylatmonomer mit einer Alkylgruppe bestehen, die 2 bis 20 Kohlenstoffatome hat, und wobei das Monomergemisch ein oder mehrere der folgenden enthalten kann: Styrol, α-Methylstyrol, Tetraethylenglykolacrylat, Hydroxyethylmethacrylat, Methylmethacrylat, Propylmethacrylat, Hexylmethacrylat, Vinylacetat und Kombinationen davon; danach
Zusetzen des Restes des emulsionspolymerisierbaren Monomergemisches in das Reaktionsrührgefäß über eine Dauer von mindestens ½ Stunde; sowie danach
Halten der Inhalte des Reaktionsrührgefäßes bei einer vorbestimmten Reaktionstemperatur für eine Dauer von mindestens ½ Stunde, um eine Polymeremulsion zu erzeugen, die als ein Haftklebstoff eingesetzt werden kann.

2. Verwendung nach Anspruch 1, **dadurch gekennzeichnet, dass** das Alkylacrylat 2-Ethylhexylacrylat, Butylacrylat, Isooctylacrylat, Isodecylacrylat oder Mischungen davon ist und die Alkylacrylate 40 % bis 90 Gewichtsprozent des Emulsionspolymers ausmachen.

3. Verwendung nach Anspruch 1 oder 2, **dadurch gekennzeichnet, dass** das Trägerharz mindestens 6 Gewichtsprozent Acrylsäure, Methacrylsäure oder Maleinsäureanhydrid aufweist.

4. Verwendung nach Anspruch 1, 2 oder 3, **dadurch gekennzeichnet, dass** die Säurezahl des Trägerharzes 100 bis 300 beträgt.

5. Verwendung nach einem der vorgenannten Ansprüche 1 bis 4, **gekennzeichnet durch** eine kleinere Menge eines anionischen oder nichtionischen Emulgiermittels.

6. Verwendung nach Anspruch 1, **dadurch gekennzeichnet, dass** das Alkylacrylat (1) 2-Ethylhexylacrylat ist und mindestens 70 Gewichtsprozent des Emulsionspolymers ausmacht; und (2) die anderen Vinylpolymere des Emulsionspolymers Butylacrylat, Styrol, α-Methylstyrol, Methylmethacrylat, Hydroxymethylmethacrylat, bis zu 7 Gewichtsprozent Tetraethylenglykoldiacrylat oder Mischungen davon sind.

7. Verwendung nach Anspruch 1 oder 6, **dadurch gekennzeichnet dass** das Trägerharz ein Butylacrylat/Acrylsäure-Copolymer ist.

8. Verwendung nach Anspruch 6, **dadurch gekennzeichnet, dass** das Trägerharz ein Butylacrylat/Acrylsäure/Styrol-Terpolymer ist.

9. Verwendung nach Anspruch 7 oder 8, **dadurch gekennzeichnet, dass** das Trägerharz eine zahlengemittelte relative Molekülmasse von 2.000 bis 2.300 hat.

10. Verwendung nach Anspruch 9, **dadurch gekennzeichnet, dass** sich das Emulsionspolymer in Gewichtsprozent aus den folgenden Monomeren zusammensetzt:
| Monomer | Gewichtsprozent |
|---|---|
| Styrol | 31 |
| 2-Ethylhexylacrylat | 54,21 |
| Methylmethacrylat | 7,22 |
| Butylacrylat | 7,22 |
| Tetraethylenglykoldiacrylat | 0,35 |

11. Verwendung nach Anspruch 9, **dadurch gekennzeichnet, dass** das Trägerharz ein Gewichtsverhältnis von Butylacrylat zu Acrylsäure von 70:30 hat.

12. Verwendung nach Anspruch 11, **dadurch gekennzeichnet, dass** sich das Emulsionspolymer in Gewichtsprozent aus den folgenden Monomeren zusammensetzt:
| Monomer | Gewichtsprozent |
|---|---|
| Methylmethacrylat | 10 |
| 2-Ethylhexylacrylat | 77 |
| Butylacrylat | 10 |
| Tetraethylenglykoldiacrylat | 3 |

13. Verwendung nach Anspruch 11, **dadurch gekennzeichnet, dass** sich das Emulsionspolymer in Gewichtsprozent aus den folgenden Monomeren zusammensetzt:
| Monomer | Gewichtsprozent |
|---|---|
| 2-Ethylhexylacrylat | 77 |
| Butylacrylat | 10 |
| Hydroxyethylmethacrylat | 10 |
| Tetraethylenglykoldiacrylat | 3 |

## Patentansprüche (Patentansprüche für folgende(n) Vertragsstaat(en): ES, GR)

1. Verwendung einer Zusammensetzung, enthaltend ein Emulsionspolymer und wahlweise Klebrigmacher, Farbstoffe, Verlaufmittel, Pigmente oder andere Bestandteile von Haftklebstoff-Formulierungen, als einen Haftklebstoff, **dadurch gekennzeichnet, dass** das Emulsionspolymer hergestellt wird durch
Vereinigen eines alkalilöslichen oder in Alkali dispergierbaren polymeren Harzes mit Wasser und einer wirksamen Menge einer alkalischen Substanz in einem Reaktionsrührgefäß, zur Bildung entweder einer Harz enthaltenden alkalischen Lösung oder einer Harz enthaltenden alkalischen Dispersion, in welcher mindestens 6 Gewichtsprozent und bis zu 30 Gewichtsprozent des polymeren Harzes hergestellt werden aus Monomeren, ausgewählt aus der Gruppe, bestehend aus einer polymerisierbaren Carbonsäure, einem polymerisierbaren Säureanhydrid und einem polymerisierbaren Ester; oder einem polymerisierbaren Ester einer anorganischen Säure; und in welcher das Polymerharz ein polymerisierbares Vinylmonomer enthält, ausgewählt aus der Gruppe, bestehend aus Acrylsäureestern und Derivaten davon, Methacrylsäureestern und Derivaten davon, Styrol, α-Methylstyrol, Vinyltoluol und Kombinationen davon;
Unterwerfen der Inhalte des Reaktionsrührgefäßes einer inerten Atmosphäre und Halten der Inhalte des Reaktionsrührgefäßes bei einer vorbestimmten Reaktionstemperatur;
Zusetzen eines Teils eines emulsionspolymerisierbaren Monomergemisches in das Reaktionsrührgefäß und danach Zusetzen einer wirksamen Menge eines Initiators zum Einleiten der Emulsionspolymerisation des emulsionspolymerisierbaren Monomergemisches in Gegenwart des polymeren Harzes, in welchem mindestens 40 Gewichtsprozent der emulsionspolymerisierbaren Monomergemisches aus mindestens einem Alkylacrylatmonomer mit einer Alkylgruppe bestehen, die 2 bis 20 Kohlenstoffatome hat, und wobei das Monomergemisch ein oder mehrere der folgenden enthalten kann: Styrol, α Methylstyrol, Tetraethylenglykolacrylat, Hydroxyethylmethacrylat, Methylmethacrylat, Propylmethacrylat, Hexylmethacrylat, Vinylacetat und Kombinationen davon; danach
Zusetzen des Restes des emulsionspolymerisierbaren Monomergemisches in das Reaktionsrührgefäß über eine Dauer von mindestens ½ Stunde; sowie danach
Halten der Inhalte des Reaktionsrührgefäßes bei einer vorbestimmten Reaktionstemperatur für eine Dauer von mindestens ½ Stunde, um eine Polymeremulsion zu erzeugen, die als ein Haftklebstoff eingesetzt werden kann.

2. Verwendung nach Anspruch 1, **dadurch gekennzeichnet, dass** das Alkylacrylat 2-Ethylhexylacrylat, Butylacrylat, Isooctylacrylat, Isodecylacrylat oder Mischungen davon ist und die Alkylacrylate 40 % bis 90 Gewichtsprozent des Emulsionspolymers ausmachen.

3. Verwendung nach Anspruch 1 oder 2, **dadurch gekennzeichnet, dass** das Trägerharz mindestens 6 Gewichtsprozent Acrylsäure, Methacrylsäure oder Maleinsäureanhydrid aufweist.

4. Verwendung nach Anspruch 1, 2 oder 3, **dadurch gekennzeichnet, dass** die Säurezahl des Trägerharzes 100 bis 300 beträgt.

5. Verwendung nach einem der vorgenannten Ansprüche 1 bis 4, **gekennzeichnet durch** eine kleinere Menge eines anionischen oder nichtionischen Emulgiermittels.

6. Verwendung nach Anspruch 1, **dadurch gekennzeichnet, dass** das Alkylacrylat (1) 2-Ethylhexylacrylat ist und mindestens 70 Gewichtsprozent des Emulsionspolymers ausmacht; und (2) die anderen Vinylpolymere des Emulsionspolymers Butylacrylat, Styrol, α Methylstyrol, Methylmethacrylat, Hydroxymethylmethacrylat, bis zu 7 Gewichtsprozent Tetraethylenglykoldiacrylat oder Mischungen davon sind.

7. Verwendung nach Anspruch 1 oder 6, **dadurch gekennzeichnet, dass** das Trägerharz ein Butylacrylat/Acrylsäure-Copolymer ist.

8. Verwendung nach Anspruch 6, **dadurch gekennzeichnet, dass** das Trägerharz ein Butylacrylat/Acrylsäure/Styrol-Terpolymer ist.

9. Verwendung nach Anspruch 7 oder 8, **dadurch gekennzeichnet, dass** das Trägerharz eine zahlengemittelte relative Molekülmasse von 2.000 bis 2.300 hat.

10. Verwendung nach Anspruch 9, **dadurch gekennzeichnet, dass** sich das Emulsionspolymer in Gewichtsprozent aus den folgenden Monomeren zusammensetzt:
| Monomer | Gewichtsprozent |
|---|---|
| Styrol | 31 |
| 2-Ethylhexylacrylat | 54,21 |
| Methylmethacrylat | 7,22 |
| Butylacrylat | 7,22 |
| Tetraethylenglykoldiacrylat | 0,35 |

11. Verwendung nach Anspruch 9, **dadurch gekennzeichnet, dass** das Trägerharz ein Gewichtsverhältnis von Butylacrylat zu Acrylsäure von 70:30 hat.

12. Verwendung nach Anspruch 11, **dadurch gekennzeichnet, dass** sich das Emulsionspolymer in Gewichtsprozent aus den folgenden Monomeren zusammensetzt:
| Monomer | Gewichtsprozent |
|---|---|
| Methylmethacrylat | 10 |
| 2-Ethylhexylacrylat | 77 |
| Butylacrylat | 10 |
| Tetraethylenglykoldiacrylat | 3 |

13. Verwendung nach Anspruch 11, **dadurch gekennzeichnet, dass** sich das Emulsionspolymer in Gewichtsprozent aus den folgenden Monomeren zusammensetzt:
| Monomer | Gewichtsprozent |
|---|---|
| 2-Ethylhexylacrylat | 77 |
| Butylacrylat | 10 |
| Hydroxyethylmethacrylat | 10 |
| Tetraethylenglykoldiacrylat | 3 |

## Revendications (Revendications pour l'(les) Etat(s) contractant(s) suivant(s): AT, BE, CH, LI, DE, FR, GB, IT, LU, NL, SE)

1. Utilisation d'une composition contenant un polymère en émulsion et, éventuellement, des agents d'adhésivité, des colorants, des agents nivelants, des pigments ou d'autres ingrédients de formulation des adhésifs sensibles à la pression comme adhésif sensible à la pression, **caractérisée en ce que** l'on prépare le polymère en émulsion par combinaison, dans un récipient de réaction sous agitation, d'une résine polymère soluble dans un alcali ou dispersible dans un alcali avec de l'eau et avec une quantité efficace d'une matière alcaline pour former soit une solution alcaline contenant la résine, soit une dispersion alcaline contenant la résine, où au moins 6% en poids jusqu'à 30% en poids de la résine polymère est préparé à partir de monomères choisis dans le groupe comprenant un acide carboxylique polymérisable, un anhydride d'acide polymérisable, et un ester polymérisable ou un ester partiel polymérisable d'un acide inorganique, et où la résine polymère inclut encore un monomère vinylique polymérisable choisi dans le groupe comprenant les esters d'acide acrylique et leurs dérivés, les esters d'acide méthacrylique et leurs dérivés, le styrène, l'α-méthylstyrène, le vinyltoluène et leurs combinaisons, mais n'inclut pas les esters acryliques ou méthacryliques de poly(oxyde d'alkylène) ;
on soumet le contenu du récipient de réaction sous agitation à une atmosphère inerte et on maintient le contenu du récipient de réaction sous agitation à une température de réaction prédéterminée ;
on ajoute au récipient de réaction sous agitation une portion d'un mélange de monomères polymérisables en émulsion et ensuite on ajoute une quantité efficace d'un initiateur pour initier la polymérisation en émulsion du mélange de monomères polymérisables en émulsion en présence de la résine polymère, où au moins 40 % en poids du mélange de monomères polymérisables en émulsion consistent en au moins un monomère d'acrylate d'alkyle ayant un groupe alkyle avec 2 à 20 atomes de carbone et le mélange de monomères peut contenir un ou plusieurs monomères parmi le styrène, l'α-méthylstyrène, le diacrylate de tétraéthylèneglycol, le méthacrylate d'hydroxyéthyle, le méthacrylate de méthyle, le méthacrylate de propyle, le méthacrylate d'hexyle, l'acétate de vinyle et leurs combinaisons ;
puis on ajoute au récipient de réaction sous agitation, sur une période de temps d'au moins 1/2 h, le restant du mélange de monomères polymérisables en émulsion; et
ensuite, on maintient le contenu du récipient de réaction sous agitation à la température de réaction prédéterminée pendant une période de temps d'au moins 1/2 h, pour produire une émulsion de polymère qui peut être utilisée comme adhésif sensible à la pression.

2. Utilisation selon la revendication 1, **caractérisée en ce que** l'acrylate d'alkyle est l'acrylate de 2-éthylhexyle, l'acrylate de butyle, l'acrylate d'isooctyle, l'acrylate d'isodécyle ou leurs mélanges et les acrylates d'alkyle constituent 40 à 90% en poids du polymère en émulsion.

3. Utilisation selon la revendication 1 ou 2, **caractérisée en ce que** la résine de support a au moins 6% en poids d'acide acrylique, d'acide méthacrylique ou d'anhydride maléique.

4. Utilisation selon la revendication 1, 2 ou 3, **caractérisée en ce que** l'indice d'acide de la résine de support est de 100 à 300.

5. Utilisation selon l'une quelconque des revendications 1 à 4, **caractérisée par** une quantité mineure d'un émulsifiant anionique ou non ionique.

6. Utilisation selon la revendication 1, **caractérisée en ce que** l'acrylate d'alkyle (1) est l'acrylate de 2-éthylhexyle et constitue au moins 70% en poids du polymère en émulsion et (2) les autres monomères vinyliques du polymère en émulsion sont l'acrylate de butyle, le styrène, l'α-méthylstyrène, le méthacrylate de méthyle, le méthacrylate d'hydroxyéthyle, jusqu'à 7% en poids de diacrylate de tétraéthylèneglycol ou leurs mélanges.

7. Utilisation selon la revendication 1 ou 6, **caractérisée en ce que** la résine de support est un copolymère d'acrylate de butyle/acide acrylique.

8. Utilisation selon la revendication 6, **caractérisée en ce que** la résine de support est un terpolymère d'acrylate de butyle/acide acrylique/styrène.

9. Utilisation selon la revendication 7 ou 8, **caractérisée en ce que** la résine de support a un poids moléculaire moyen en nombre de 2000 à 2300.

10. Utilisation selon la revendication 9, **caractérisée en ce que** le polymère en émulsion comprend les monomères suivants en % en poids :
| MONOMERE | % en poids |
|---|---|
| Styrène | 31 |
| Acrylate de 2-éthylhexyle | 54,21 |
| Méthacrylate de méthyle | 7,22 |
| Acrylate de butyle | 7,22 |
| Diacrylate de tétraéthylèneglycol | 0,35 |

11. Utilisation selon la revendication 9, **caractérisée en ce que** la résine de support a un rapport pondéral d'acrylate de butyle à l'acide acrylique de 70:30.

12. Utilisation selon la revendication 11, **caractérisée en ce que** le polymère en émulsion comprend les monomères suivants en % en poids :
| MONOMERE | % en poids |
|---|---|
| Méthacrylate de méthyle | 10 |
| Acrylate de 2-éthylhexyle | 77 |
| Acrylate de butyle | 10 |
| Diacrylate de tétraéthylèneglycol | 3 |

13. Utilisation selon la revendication 11, **caractérisée en ce que** le polymère en émulsion comprend les monomères suivants en % en poids :
| MONOMERE | % en poids |
|---|---|
| Acrylate de 2-éthylhexyle | 77 |
| Acrylate de butyle | 10 |
| Méthacrylate d'hydroxyéthyle | 10 |
| Diacrylate de tétraéthylèneglycol | 3 |

## Revendications (Revendications pour l'(les) Etat(s) contractant(s) suivant(s): ES, GR)

1. Utilisation d'une composition contenant un polymère en émulsion et, éventuellement, des agents d'adhésivité, des colorants, des agents nivelants, des pigments ou d'autres ingrédients de formulation des adhésifs sensibles à la pression comme adhésif sensible à la pression, **caractérisée en ce que** l'on prépare le polymère en émulsion par combinaison, dans un récipient de réaction sous agitation, d'une résine polymère soluble dans un alcali ou dispersible dans un alcali avec de l'eau et avec une quantité efficace d'une matière alcaline pour former soit une solution alcaline contenant la résine, soit une dispersion alcaline contenant la résine, où au moins 6% en poids jusqu'à 30% en poids de la résine polymère est préparé à partir de monomères choisis dans le groupe comprenant un acide carboxylique polymérisable, un anhydride d'acide polymérisable, et un ester polymérisable ou un ester partiel polymérisable d'un acide inorganique, et où la résine polymère inclut encore un monomère vinylique polymérisable choisi dans le groupe comprenant les esters d'acide acrylique et leurs dérivés, les esters d'acide méthacrylique et leurs dérivés, le styrène, l'α-méthylstyrène, le vinyltoluène et leurs combinaisons ;
on soumet le contenu du récipient de réaction sous agitation à une atmosphère inerte et on maintient le contenu du récipient de réaction sous agitation à une température de réaction prédéterminée ;
on ajoute au récipient de réaction sous agitation une portion d'un mélange de monomères polymérisables en émulsion et ensuite on ajoute une quantité efficace d'un initiateur pour initier la polymérisation en émulsion du mélange de monomères polymérisables en émulsion en présence de la résine polymère, où au moins 40 % en poids du mélange de monomères polymérisables en émulsion consistent en au moins un monomère d'acrylate d'alkyle ayant un groupe alkyle avec 2 à 20 atomes de carbone et le mélange de monomères peut contenir un ou plusieurs monomères parmi le styrène, l'α-méthylstyrène, le diacrylate de tétraéthylèneglycol, le méthacrylate d'hydroxyéthyle, le méthacrylate de méthyle, le méthacrylate de propyle, le méthacrylate d'hexyle, l'acétate de vinyle et leurs combinaisons ;
puis on ajoute au récipient de réaction sous agitation, sur une période de temps d'au moins 1/2 h, le restant du mélange de monomères polymérisables en émulsion; et
ensuite, on maintient le contenu du récipient de réaction sous agitation à la température de réaction prédéterminée pendant une période de temps d'au moins 1/2 h, pour produire une émulsion de polymère qui peut être utilisée comme adhésif sensible à la pression.

2. Utilisation selon la revendication 1, **caractérisée en ce que** l'acrylate d'alkyle est l'acrylate de 2-éthylhexyle, l'acrylate de butyle, l'acrylate d'isooctyle, l'acrylate d'isodécyle ou leurs mélanges et les acrylates d'alkyle constituent 40 à 90% en poids du polymère en émulsion.

3. Utilisation selon la revendication 1 ou 2, **caractérisée en ce que** la résine de support a au moins 6% en poids d'acide acrylique, d'acide méthacrylique ou d'anhydride maléique.

4. Utilisation selon la revendication 1, 2 ou 3, **caractérisée en ce que** l'indice d'acide de la résine de support est de 100 à 300.

5. Utilisation selon l'une quelconque des revendications 1 à 4, **caractérisée par** une quantité mineure d'un émulsifiant anionique ou non ionique.

6. Utilisation selon la revendication 1, **caractérisée en ce que** l'acrylate d'alkyle (1) est l'acrylate de 2-éthylhexyle et constitue au moins 70% en poids du polymère en émulsion et (2) les autres monomères vinyliques du polymère en émulsion sont l'acrylate de butyle, le styrène, l'α-méthylstyrène, 1e méthacrylate de méthyle, le méthacrylate d'hydroxyéthyle, jusqu'à 7% en poids de diacrylate de tétraéthylèneglycol ou leurs mélanges.

7. Utilisation selon la revendication 1 ou 6, **caractérisée en ce que** la résine de support est un copolymère d'acrylate de butyle/acide acrylique.

8. Utilisation selon la revendication 6, **caractérisée en ce que** la résine de support est un terpolymère d'acrylate de butyle/acide acrylique/styrène.

9. Utilisation selon la revendication 7 ou 8, **caractérisée en ce que** la résine de support a un poids moléculaire moyen en nombre de 2000 à 2300.

10. Utilisation selon la revendication 9, **caractérisée en ce que** le polymère en émulsion comprend les monomères suivants en % en poids :
| MONOMERE | % en poids |
|---|---|
| Styrène | 31 |
| Acrylate de 2-éthylhexyle | 54,21 |
| Méthacrylate de méthyle | 7,22 |
| Acrylate de butyle | 7,22 |
| Diacrylate de tétraéthylèneglycol | 0,35 |

11. Utilisation selon la revendication 9, **caractérisée en ce que** la résine de support a un rapport pondéral d'acrylate de butyle à l'acide acrylique de 70:30.

12. Utilisation selon la revendication 11, **caractérisée en ce que** le polymère en émulsion comprend les monomères suivants en % en poids :
| MONOMERE | % en poids |
|---|---|
| Méthacrylate de méthyle | 10 |
| Acrylate de 2-éthylhexyle | 77 |
| Acrylate de butyle | 10 |
| Diacrylate de tétraéthylèneglycol | 3 |

13. Utilisation selon la revendication 11, **caractérisée en ce que** le polymère en émulsion comprend les monomères suivants en % en poids :
| MONOMERE | % en poids |
|---|---|
| Acrylate de 2-éthylhexyle | 77 |
| Acrylate de butyle | 10 |
| Méthacrylate d'hydroxyéthyle | 10 |
| Diacrylate de tétraéthylèneglycol | 3 |
